# EUROPÄISCHE PATENTSCHRIFT

(11) **EP 2 082 210 B1**
(45) Veröffentlichungstag und Bekanntmachung des Hinweises auf die Patenterteilung: **27.07.2011**
(21) Anmeldenummer: 07821152.1
(22) Anmeldetag: 10.10.2007
(51) Int. Cl.: G01N 3/42

(54) **VERFAHREN UND VORRICHTUNG ZUR BESTIMMUNG DES HÄRTEGRADES VON HALBFESTEN MATERIALIEN**
METHOD AND DEVICE FOR DETERMINING THE DEGREE OF HARDNESS OF SEMISOLID MATERIALS
PROCÉDÉ ET DISPOSITIF DE DÉTERMINATION DU DEGRÉ DE DURETÉ DE MATÉRIAUX SEMI-SOLIDES

(30) Priorität: 17.10.2006 DE 102006049813
(43) Veröffentlichungstag der Anmeldung: 29.07.2009
(60) Teilanmeldung: 11169820.5
(73) Patentinhaber: Petrotest Instruments GmbH & Co. KG, 15827 Dahlewitz (DE)
(72) Erfinder: HANDSCHUCK, Bernhard, 12395 Berlin (DE); EILERS, Helmut, 15732 Schulzendorf (DE)
(74) Vertreter: Gulde Hengelhaupt Ziebig & Schneider
(86) Internationale Anmeldenummer: PCT/EP2007/060784
(87) Internationale Veröffentlichungsnummer: WO 2008/046774

(56) Entgegenhaltungen:
- EP-A- 1 061 354
- DE-A1- 10 257 170
- DE-U1- 29 711 490
- FR-A- 2 823 307
- US-A- 6 142 010

## Beschreibung

Die vorliegende Erfindung betrifft ein Verfahren zur Bestimmung des Härtegrades von halbfesten Materialien, insbesondere betrifft die vorliegende Erfindung ein Verfahren zur Messung des Härtegrades von Straßenbelägen wie Asphalt oder zur Messung des Härtegrades von Schmierstoffen.

Halbfeste Materialien wie Asphalte und/oder Bitumen finden unter Anderem im Straßenbau Anwendung. Asphalte sind bis auf wenige natürliche Vorkommen technisch hergestellte Gemische aus Bitumen und Mineralstoffen. Durch Veränderung der Bindemittel- und Mineralstoffsorten sowie deren Zugabemenge können Asphalte mit unterschiedlichen Eigenschaften, wie z.B. unterschiedlichen Härtegraden für diverse Anforderungsprofile hergestellt werden.

Dabei sollen Asphalte jene Anforderungen erfüllen, die von Auftraggebern, Auftragnehmern, von Verkehrsteilnehmern, Steuerzahlern und von Anwohnern gestellt werden. Dies sind insbesondere Sicherheit und Fahrkomfort, d.h. Ebenheit, Griffigkeit, Helligkeit der Asphaltdecke, Wirtschaftlichkeit, d.h. Haltbarkeit, Risssicherheit, Verformungsbeständigkeit, Alterungs- oder Ermüdungsbeständigkeit, leichte und kurze Instandsetzung, günstige Rohstoffe, Mischung - Einbau und Verdichtung mit üblichen einfachen Methoden und darüber hinaus Lärmminderung.

Das Bitumen im Asphalt unterliegt erheblicher Beanspruchung durch Temperatur und Verkehrsbelastung. Asphaltdecken in heimischen Regionen kühlen in Folge von Salzstreuung im Winter auf -30°C ab und erreichen durch Sonneneinstrahlung im Sommer +50°C. Eine wichtige Kenngröße zur Charakterisierung der Eigenschaften des Bitumens ist der Härtegrad. Weicheres Bitumen neigt im Sommer eher zur Spurrillenbildung, härteres Bitumen neigt im Winter eher zur Rissbildung. Daher ist die genaue Bestimmung des Härtegrades von Bitumen ein wichtiges Mittel zur Qualitätskontrolle.

Zur Härtebestimmung von halbfesten Prüfmaterialien wie Bitumen findet international das Verfahren der Penetration gemäß ASTM D 5, IP 49, DIN EN 1426, früher: DIN 52010 Anwendung. Hierbei dringt ein nach Gewicht und Abmaßen spezifizierter Messkörper - bestehend aus Fallstab und Eindringkörper - für kurze Zeit unter Eigengewicht in das zu untersuchende Material ein. Die hiernach gemessene Eindringtiefe in das Prüfmaterial ist ein Maß für dessen Härte, die sich bei Bitumensorten in der entsprechenden Bezeichnung niederschlägt ("B80" bedeutet hier 80/10 mm Eindringtiefe). Die Vorrichtung zum Positionieren und Auslösen des Messkörpers und zum Messen der Eindringung ins Prüfmaterial wird Penetrometer, das Messverfahren Penetration genannt.

Voraussetzung für die Vergleichbarkeit von Messergebnissen ist die Einhaltung der Spezifikationen und das genaue Positionieren des Messkörpers in der Startposition vor der eigentlichen Penetration. Dies bedeutet, dass der Eindringkörper (z.B. eine Eindringnadel) direkt über der Oberfläche positioniert wird, also im Idealfall genau einen unendlich kleinen Berührungspunkt mit dem zu vermessenden Material aufweist. Diese Startposition wird bei den bekannten Vorrichtungen beispielsweise unter Beobachtung eines Benutzers durch vorsichtiges Absenken des Messkörpers mittels einer Höhenverstellung bis zur Berührung der Eindringkörper-Spitze mit der Prüfmaterial-Oberfläche erreicht. Aus dieser Startposition wird die Penetration durch Freigabe des bis dahin im Penetrometer gehaltenen Messkörpers (bestehend Fallstab und Eindringkörper) gestartet. Dabei dringt der Messkörper in das Prüfmaterial unter Eigengewicht ein. Nach einer vorgegebenen Eindringzeit wird der Messkörper in der neuen Stellung arretiert. Nach ASTM D 5, IP 49, DIN EN 1426 beträgt die Eindringzeit 5 Sekunden. Der Eindringweg bzw. die Eindringtiefe ist das Ergebnis der Penetration und dient als Maß für den zu ermittelnden Härtegrad.

Die erforderliche Einstellung der Startposition ist mit den bekannten Vorrichtungen zwangsläufig mit Fehlern behaftet-Grund dafür ist die manuelle Einstellung der Startposition unter (subjektiver) Beobachtung eines Benutzers. Dabei wird der Messkörper mit einem Handrad abwärts bewegt. Durch die Beobachtung des Benutzers wird dann der Aufsetzpunkt gefunden.

Erschwerend kommt hinzu, dass z.B. nach DIN EN 1426 unter einer Temperierflüssigkeit gemessen wird und damit der Aufsetzpunkt "unter Wasser" gefunden werden muss. Handelt es sich bei dem zu messenden Material um Bitumen, wird das einfallende Licht nur geringfügig reflektiert. Die schlechten Sichtverhältnisse führen zu einer eingeschränkten bzw. verschlechterten Wahrnehmung des Benutzers. Zur Verbesserung der Sichtverhältnisse werden nach dem Stand der Technik beispielsweise Spiegel, Lichtquellen (Lampen) und optische Hilfen verwendet. So können zum Beispiel Lupen und Punktleuchten zur Schattenbildung der sich der Prüfoberfläche nähernden Spitze verwendet werden. Diese gewährleisten jedoch keine exakte Bestimmung des Aufsetzpunktes (Startposition), wodurch die Bestimmung des Härtegrades des zu vermessenden Materials ebenfalls fehlerbehaftet ist.

Ein fehlerhafte Startposition (Aufsetzfehler) wirkt sich auf das Messergebnis zur Bestimmung des Härtegrades aus:
- erreicht die Spitze des Messkörpers die Oberfläche des Prüfmaterials nur scheinbar, d.h. das Aufsetzen wird zu früh gestoppt, dann wird der Messkörper bei der nachfolgenden Penetration durch die zu große Fallhöhe zu tief ins Prüfmaterial eindringen.
- dringt die Spitze des Messkörpers in der Startposition bereits in die Oberfläche des Prüfmaterials ein, d.h. das Aufsetzen wird zu spät gestoppt, dann wird der Messkörper bei der nachfolgenden Penetration zu gering eindringen.

Weiterhin ist aus DE 40 21 178 A1 ein Verfahren zur Bestimmung des Härtegrades von halbfesten Materialien durch Messung der Eindringtiefe eines in das zu untersuchende Material "fallenden Messkörpers" bekannt, wobei der Messkörper mittels eines Elektromotors, einer Hubstange und anderen Elementen zur vertikalen Abwärtsbewegung gebracht wird. Eine Vorabmessung zur Bestimmung des Nullpunktes (Startpunktes), um den Messkörper in eine vordefinierte Startposition (d.h. in eine vordefinierte Fallhöhe) zu bringen, ist nicht beschrieben und auch nicht notwendig, da die Fallhöhe nur unwesentlich zur Eindringkraft des Messkörpers beiträgt. Vielmehr soll der Messkörper knapp über der Probe angeordnet sein, was den Einfluss des Fallweges minimiert.

Darüber hinaus ist aus DE 38 30 815 A1 ein Messverfahren zur Prüfung der Härte eines Prüfkörpers bekannt, bei dem ein Messkörper ebenfalls nicht unter Eigengewicht auf die Probe fällt; vielmehr wird die Probe durch den Messkörper mittels unterschiedlicher Prüfkräfte F1 und F2 beaufschlagt. Dazu ist es vorgesehen, zunächst eine relative hohe Vorlast (bis zu 20 %) der Prüflast aufzubringen und nach Aufbringen der Vorlast den Nullpunkt über Extrapolation mathematisch zu ermitteln. Ein Aufbringen einer solchen Prüflast würde jedoch zu einer Verfälschung des Messergebnisses bei der Messung des Härtegrades von halbfesten Materialien führen.

Darüber hinaus ist aus DE 102 57 170 B4 ein Verfahren zur Bestimmung des Härtegrades von halbfesten Materialien bekannt, bei dem vor der eigentlichen Messung des Härtegrades der mit einem Kraft-Weg-Sensor verbundene Messkörper derart in das zu vermessende Material abgesenkt wird, dass das zu untersuchende Material beim ersten Aufsetzen des mit dem Sensor verbundenen Messkörpers lediglich eine elastische Verformung erfährt, mittels mindestens zweier Kraft-Weg-Messwerte des Sensors die exakte Startposition für den Messkörper über oder auf dem zu vermessenden Material bestimmt und danach der Messkörper auf diese Startposition eingestellt wird. Durch dieses Verfahren wird ein automatischer Aufsetzvorgang ermöglicht, wodurch subjektive Aufsetzfehler eliminiert werden können. Nachteilig ist jedoch die relativ große Masse, die auf den Kraft-Weg-Sensor wirkt, was zu einer großen Empfindlichkeit gegenüber Störungen, wie Vibration etc. führt.

Es ist daher Aufgabe der vorliegenden Erfindung, ein Verfahren anzugeben, mit welchen der Härtegrad von halbfesten Prüfmaterialien gegenüber dem Stand der Technik mit hoher Genauigkeit bei gleichzeitig geringerer Empfindlichkeit gegenüber elektronischen und/oder mechanischen Störungen bestimmt werden kann.

Diese Aufgabe wird erfindungsgemäß gelöst durch die Merkmale im kennzeichnenden Teil des Anspruchs 1 im Zusammenwirken mit den Merkmalen im jeweiligen Oberbegriff.

Zweckmäßige Ausgestaltungen der Erfindung sind in den Unteransprüchen enthalten.

Ein besonderer Vorteil der vorliegenden Erfindung besteht darin, dass mit der erfindungsgemäßen Vorrichtung und dem erfindungsgemäßen Verfahren der Härtegrad von halbfesten Prüfmaterialien erheblich zuverlässiger und einfacher als nach dem Stand der Technik (DE 102 57 170 B4) bestimmt werden kann.

Der Härtegrad des halbfesten Materials wird aus der Eindringtiefe des Messkörpers bestimmt, wobei vor der eigentlichen Messung ein Kraft-Weg-Sensor von einer Ausgangsposition bis zu einem Umkehrpunkt abgesenkt wird und vor oder während des Absenkens ein bereinigter Kraftmesswert ermittelt und für eine Vielzahl von Messzeitpunkten (vorzugsweise mehr als zehn, jedoch mindestens zwei) die Kraftdifferenz zwischen dem bereinigten Kraftmesswert und dem zum jeweiligen Zeitpunkt gemessenen Kraftmesswert bestimmt und derjenige Nullzeitpunkt ermittelt wird, für den mindestens eines der folgenden Kriterien i)- iii):
i) ab dem Nullzeitpunkt besitzen die Kraftdifferenzen aufeinanderfolgender Zeitpunkte das gleiche Vorzeichen und die Zeitdifferenz zwischen dem Nullzeitpunkt und einem der aufeinanderfolgenden Zeitpunkte übersteigt eine vorgegebenen Zeitspanne,
ii) ab dem Nullzeitpunkt besitzen die Kraftdifferenzen aufeinanderfolgender Zeitpunkte das gleiche Vorzeichen und die Kraftdifferenz eines dem Nullzeitpunkt nachfolgenden Zeitpunktes übersteigt einen vorgegebenen Kraftwert,
iii) ab dem Nullzeitpunkt besitzen die Kraftdifferenzen aufeinanderfolgender Zeitpunkte das gleiche Vorzeichen und die Wegdifferenz zwischen dem Nullzeitpunkt und einem der aufeinanderfolgenden Zeitpunkte übersteigt eine vorgegebene Weglänge,
erfüllt ist, wobei die Position des Messkörpers zum Nullzeitpunkt als exakte Startposition der Oberfläche des zu vermessenden Materials verwendet wird.

Vorzugsweise wird zur Ermittlung des bereinigten Kraftmesswertes ein Zeitintervall nach Beginn des Absenkens des Messkörpers bis zum Erreichen des Umkehrpunktes in eine Vielzahl von Messzeitpunkte unterteilt, wobei für eine vorgegebene Anzahl von aufeinanderfolgenden Zeitpunkten, während derer sich der Messkörper über dem zu vermessenden Material befindet, die jeweiligen Kraftmesswerte gemessen und daraus ein bereinigter Kraftmesswert als mathematisches Mittel der gemessenen Kraftmesswerte gebildet wird. Vorzugsweise wird die Ermittlung des bereinigten Kraftmesswertes zusätzlich unter Berücksichtigung der Absenkgeschwindigkeit des Messkörpers vorgenommen. Nach einer alternativen, bevorzugten Ausführungsvariante des erfindungsgemäßen Verfahrens wird zur Ermittlung des bereinigten Kraftmesswertes ein Referenzwert verwendet. Vorzugsweise wird der Referenzwert unter Berücksichtigung des Gewichts und der Absenkgeschwindigkeit des Messkörpers ausgewählt.

Vorzugsweise wird zur Absenkung des Messkörpers in das zu vermessende Material ein Schrittmotor verwendet. Vorzugsweise wird ein zu vermessendes Material mit einem Nadel-Penetrationswert nach ASTM D5 von 5 bis 500 verwendet wird. Normen mit diesem Nadel-Penetrationswert sind : ASTM D5, ASTM D217, IP50, IP179, ISO2137 und ASTM D5329. Vorzugsweise wird der Messkörper nur so geringfügig in das zu vermessende Material abgesenkt wird, dass dieses beim Eindringen des Messkörper bis zum Umkehrpunkt lediglich eine elastische Verformung erfährt.

Nach einer alternativen, bevorzugten Ausführungsvariante des erfindungsgemäßen Verfahrens wird ein zu vermessendes Material mit einem Arbeits-Penetrationswert nach ASTM D217 von 50 bis 500 verwendet wird. Vorzugsweise wird der Messkörper derart in das zu vermessende Material abgesenkt, dass dieses beim Eindringen des Messkörper bis zum Umkehrpunkt eine inelastische Verformung erfährt.

Vorzugsweise wird die Zeitspanne, der Kraftwert und/oder die Weglänge für die Abbruchskriterien i)- iii) in Abhängigkeit des zu untersuchenden Materials und/oder der Geräteparameter vorgegeben. Vorzugsweise ist sowohl das Kriterium ii) als auch gleichzeitig mindestens eines der Kriterien i)und iii) erfüllt. Besonders bevorzugt sind gleichzeitig sämtliche Kriterien i)- iii) erfüllt.

Bevorzugt wird ein Penetrometer verwendet, das einen Messkörper, einen Kraft-Weg-Sensor, ein Mittel zur vertikalen Bewegung des Messkörpers und eine Einheit zur Auswertung der Messwerte des Kraft-/Wegsensors und zur Steuerung des Mittels zur vertikalen Bewegung des Messkörpers aufweist, wobei der Messkörper einen Fallstab und einen Eindringkörper (Eindringnadel) aufweist und durch eine Fallstab-Arretierung gehalten ist, wobei die Fallstab-Arretierung über dem zu vermessenden Material abgestützt ist, und wobei der Kraft-/Wegsensor mit dem Messkörper verbunden ist und die Auswerte- und Steuereinheit sowohl zum Kraft-/Wegsensor als auch zum Mittel zur vertikalen Bewegung des Messkörpers eine Datenübertragung aufweist, wobei die Einheit zur Auswertung der Messwerte des Kraft-/Wegsensors und zur Steuerung des Mittels zur vertikalen Bewegung des Messkörpers ein Mittel zur Bestimmung eines bereinigten Kraftmesswerts für eine Vielzahl von Messzeitpunkten (vorzugsweise mehr als zehn, jedoch mindestens zwei) und ein Mittel zur Bestimmung der Kraftdifferenz zwischen dem bereinigten Kraftmesswert und dem zum jeweiligen Zeitpunkt gemessenen Kraftmesswert aufweist, wobei die Einheit zur Auswertung der Messwerte des Kraft-/Wegsensors und zur Steuerung des Mittels zur vertikalen Bewegung des Messkörpers weiterhin zur Bestimmung eines Nullzeitpunkts ausgebildet ist, für den mindestens eines der folgenden Kriterien iv)- vi):
iv) ab dem Nullzeitpunkt besitzen die Kraftdifferenzen aufeinanderfolgender Zeitpunkte das gleiche Vorzeichen und die Zeitdifferenz zwischen dem Nullzeitpunkt und einem der aufeinanderfolgenden Zeitpunkte übersteigt eine vorgegebenen Zeitspanne,
v) ab dem Nullzeitpunkt besitzen die Kraftdifferenzen aufeinanderfolgender Zeitpunkte das gleiche Vorzeichen und die Kraftdifferenz eines dem Nullzeitpunkt nachfolgenden Zeitpunktes übersteigt einen vorgegebenen Kraftwert,
vi) ab dem Nullzeitpunkt besitzen die Kraftdifferenzen aufeinanderfolgender Zeitpunkte das gleiche Vorzeichen und die Wegdifferenz zwischen dem Nullzeitpunkt und einem der aufeinanderfolgenden Zeitpunkte übersteigt eine vorgegebene Weglänge,
erfüllt ist.

Vorzugsweise ist die Einheit zur Auswertung der Messwerte des Kraft-/Wegsensors und zur Steuerung des Mittels zur vertikalen Bewegung des Messkörpers derart ausgebildet, dass die Position des Messkörpers zum Nullzeitpunkt als exakte Startposition der Oberfläche des zu vermessenden Materials verwendet und der Messkörper vor der eigentlichen Messung des Härtegrades auf diese Startposition eingestellt wird.

Vorzugsweise wird zur Ermittlung des bereinigten Kraftmesswertes ein Zeitintervall nach Beginn des Absenkens des Messkörpers bis zum Erreichen des Umkehrpunktes in eine Vielzahl von Messzeitpunkte unterteilt, wobei für eine vorgegebene Anzahl von aufeinanderfolgenden Zeitpunkten, während derer sich der Messkörper über dem zu vermessenden Material befindet, die jeweiligen Kraftmesswerte gemessen und daraus ein bereinigter Kraftmesswert als mathematisches Mittel der gemessenen Kraftmesswerte gebildet wird. Vorzugsweise wird die Ermittlung des bereinigten Kraftmesswertes zusätzlich unter Berücksichtigung der Absenkgeschwindigkeit des Messkörpers vorgenommen.

Vorzugsweise sind die Zeitspanne, der Kraftwert und/oder die Weglänge für die Abbruchskriterien iv)- vi) in Abhängigkeit des zu untersuchenden Materials und/oder der Geräteparameter voreingestellt. Vorzugsweise ist die Einheit zur Auswertung der Messwerte des Kraft-/Wegsensors und zur Steuerung des Mittels zur vertikalen Bewegung des Messkörpers derart ausgebildet, dass zur Bestimmung des Nullzeitpunkts sowohl das Kriterium v) als auch gleichzeitig mindestens eines der Kriterien iv)und vi) erfüllt sind. Besonders bevorzugt sind gleichzeitig sämtliche Kriterien i)- iii) erfüllt.

Vorzugsweise ist der Kraft-/Wegsensor innerhalb des Fallstabs angeordnet ist. Dadurch können vorteilhafterweise unerwünschte Massen, die auf den Kraftsensor einwirken, reduziert werden.

Vorzugsweise ist der Kraft-/Wegsensor im unteren Bereich des Fallstabs, besonders bevorzugt unmittelbar oberhalb einer Einspannung für den Eindringkörper, angeordnet. Der Eindringkörper ist vorzugsweise als Eindringnadel ausgebildet.

Die für den Kraft-/Wegsensor erforderliche Versorgung bzw. für das daraus resultierende Messsignal der Oberflächenberührung kann über elektrische Kontakte oder kontaktlos bei Verwendung elektromagnetischer Wellen an die allgemeine Steuerung der Apparatur (Auswerte- und Steuereinheit) übertragen werden. Dieser Signalaustausch darf den anschließenden Eindringvorgang der eigentlichen Eindringprüfung durch unerwünschte Reibung nicht stören, weshalb die Kontaktierung vorzugsweise nach dem Aufsetzvorgang - aber vor der Eindringprüfung (automatisch) - wegschwenkt.

Dazu weist der Kraft-/Wegsensor zur Datenübertragung vorzugsweise einen ersten elektrischen Kontakt und die Auswerte- und Steuereinheit einen zweiten elektrischen Kontakt auf, wobei die elektrischen Kontakte seitlich nebeneinander angeordnet sind und der zweite elektrische Kontakt der Auswerte- und Steuereinheit zur Kontaktierung und Dekontaktierung des ersten elektrischen Kontakts mit einem Mittel zur horizontalen Bewegung des zweiten elektrischen Kontaktes der Auswerte- und Steuereinheit verbunden ist. Vorzugsweise ist der zweite elektrische Kontakt der Auswerte- und Steuereinheit an einem schwenkbaren Ausleger angeordnet, wobei der Ausleger durch eine Schwenkbewegung eine Kontaktierung bzw. Dekontaktierung des ersten elektrischen Kontakts realisieren kann.

Alternativ ist die Verwendung eines Penetrometers bevorzugt, bei dem Mittel zur drahtlosen Datenübertragung zwischen Kraft-/Wegsensor und Auswerte- und Steuereinheit und/oder zwischen Auswerte- und Steuereinheit und dem Mittel zur vertikalen Bewegung des Messkörpers vorgesehen sind. Vorzugsweise weist das Mittel zur drahtlosen Datenübertragung zwischen Kraft-/Wegsensor und Auswerte- und Steuereinheit einen Transponder auf, wobei der Transponder im Kraft-/Wegsensor integriert ist oder wobei der Transponder im Fallstab integriert und mit dem Kraft-/Wegsensor verbunden ist.

Vorzugsweise ist das Mittel zur vertikalen Bewegung des Messkörpers ein Schrittmotor. Vorzugsweise ist die Auswerte- und Steuereinheit durch ein Datenverarbeitungsgerät oder durch mehrere, separate Module ausgebildet.

Die Erfindung soll nachstehend anhand eines zumindest teilweise in den Figuren dargestellten Ausfuhrungsbeispiels erläutert werden. Es zeigen:
- Fig. 1:: ein Penetrometer nach dem Stand der Technik,
- Fig. 2:: eine schematische Darstellung eines Messkörpers mit integriertem Kraft-/Wegsensor eines erfin- dungsgemäßen Penetrometers,
- Fig. 3:: ein Diagramm, welches die am Kraft-/Wegsensor gemessenen Kraftdifferenzen in Abhängigkeit der Zeit sowie die Werte eines Zeitzählers darstellt, wobei als Abbruchskriterium eine vorgegebene Zeitspanne des Zeitzählers von 20 ms verwendet wird,
- Fig. 4:: ein Diagramm, welches die am Kraft-/Wegsensor gemessenen Kraftdifferenzen in Abhängigkeit des Verfahrweges des Messkörpers sowie die Werte eines Wegzählers darstellt, wobei als Abbruchs- kriterium ein vorgegebener Verfahrweg des Wegzählers von 0,2 mm verwendet wird, und
- Fig. 5:: ein Diagramm, welches die am Kraft-/Wegsensor gemessenen Kraftdifferenzen in Abhängigkeit des Verfahrweges des Messkörpers sowie die Werte eines Wegzählers darstellt, wobei als Abbruchs- kriterium eine vorgegebene Kraftdifferenz des Kraft-/Wegsensors von ΔFₖᵣᵢₜ verwendet wird.

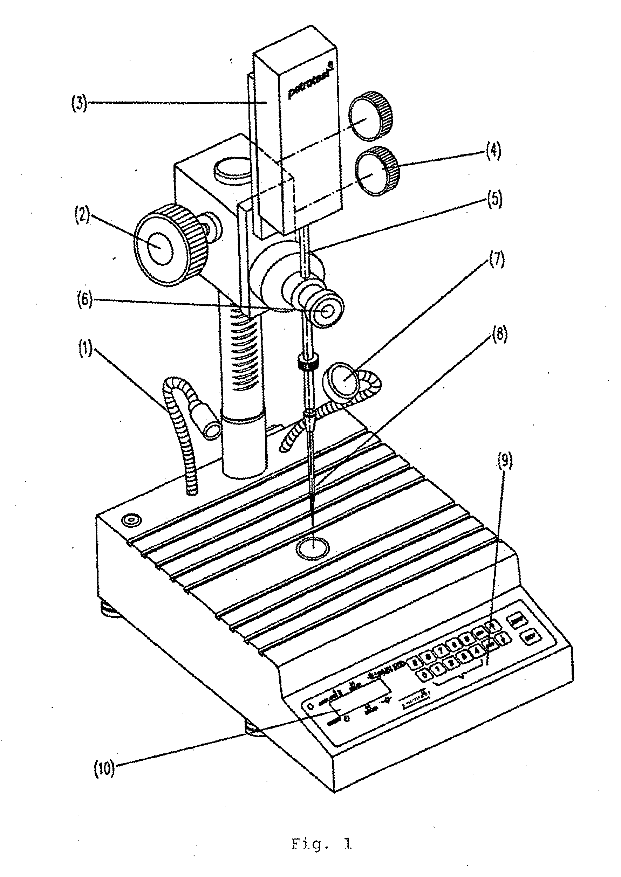

Fig.1 zeigt ein Penetrometer für die Bestimmung des Härtegrades von halbfestem Material nach dem Stand der Technik. Das Penetrometer wird zur Messung über dem zu vermessenen Prüfmaterial aufgestellt. Als halbfeste Materialien kommen insbesondere Erdölprodukte, wie z.B. Bitumen in Betracht.

Andere halbfeste Materialien können aber zum Beispiel Produkte der Lebensmittelindustrie, der Verpackungsindustrie, der Kosmetikindustrie, der chemischen Industrie und ähnliche Materialien sein. Das Penetrometer verfügt über einen Fallstab 5 mit Eindringkörper 8 (z.B. Nadel), welche in diesem Beispiel für die Bitumenmessung ausgeführt sind. Zur Bestimmung des Härtegrades wird der Fallstab 5 mit dem Eindringkörper 8 mittels der Handräder 2,4 zum Aufsetzen auf die Oberfläche des zu vermessenden Prüfmaterials abwärts bewegt, bis die Spitze des Eindringkörpers 8 das Prüfmaterial kontaktiert. Diese Position ist die sog. Startposition der Messung. Dabei ist die zu bestimmende Startposition (Aufsetzpunkt) deshalb schwer zu ermitteln, weil einerseits die Sichtverhältnisse im Bereich des Aufsetzpunktes relativ schlecht sind und andererseits die subjektive Betrachtung des Benutzers, der das Gerät bedient, fehlerhaft ist oder zumindest fehlerhaft sein kann. Zur Verbesserung der optischen Verhältnisse verfügt ein Penetrometer nach dem Stand der Technik über eine Lampe 1 und eine Lupe 7. Der Aufsetzpunkt kann mit der vorliegenden Anordnung nicht durch Gegendruck des zu vermessenden Prüfmaterials bestimmt werden, da der Messkörper 5, 8 bereits bei geringen Drücken in das zu vermessende Prüfmaterial eindringen würde, was die Startposition der Messung und damit die nachfolgende Messung selbst verfälschen würde. Diese Messfehler bei der Bestimmung des Härtegrades von halbfestem Prüfmaterial können mit einer erfindungsgemäßen Anordnung eliminiert werden.

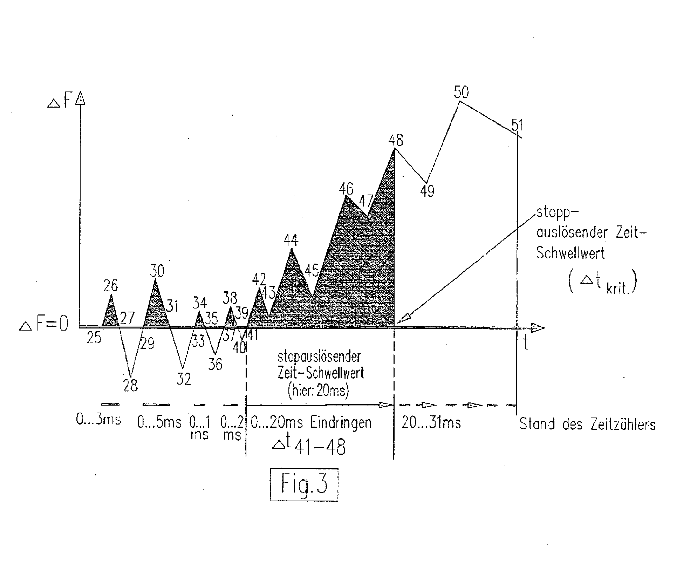

Nach DE 102 57 170 B4 muss die Startposition nicht mehr manuell, sondern kann automatisch eingestellt werden. Gegenüber dem aus DE 102 57 170 B4 bekannten Verfahren lässt sich der Auftreffpunkt des Eindringkörpers nach dem erfindungsgemäßen Verfahren (Fig. 3-5) über eine Einpunktmessung des Kraft-/Wegsensors 20 erheblich zuverlässiger und einfacher ermitteln. Dabei wird die vom Kraft-/Wegsensor 20 beim Absenken des Messkörpers 5, 8 gemessene Kraft auf Änderungen gegenüber einem bereinigten Kraftmesswert, d.h. gegenüber den zu kompensierenden statischen Einflüssen, wie Gewicht des Messkörpers 5,8 und Offseteinflüssen überwacht (die Kompensation wird z.B. über Kondensatorfilterung im analogen Messsignal erreicht). Sind die Absenkgeschwindigkeit und das Gewicht der abzusenkenden Komponenten bekannt, kann auch ein Referenzwert als bereinigter Kraftmesswert verwendet werden.

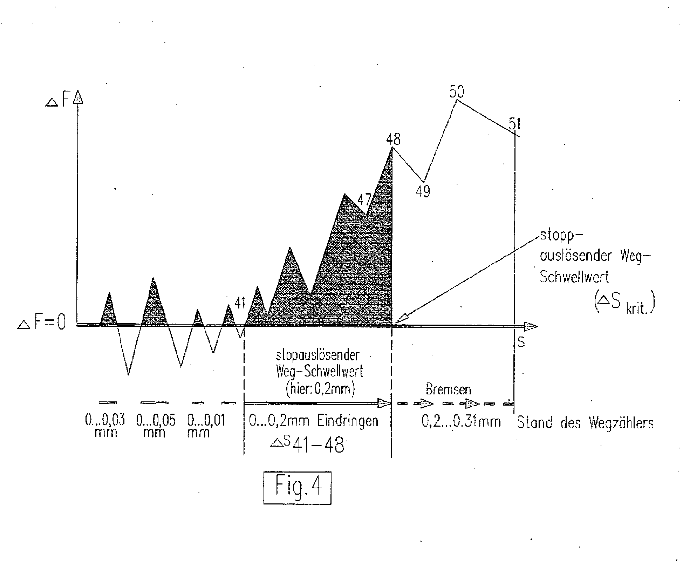

Erhöht sich gemessene Kraft (und damit die ermittelte Kraftdifferenz) bei beispielsweise gleichförmiger Abwärtsbewegung einseitig von der sonst durch die Kompensation vorliegenden Nulllinie (=bereinigter Kraftmesswert) in der Richtung eines aufsetzenden Messkörpers 5, 8, so wird dieser zunächst relativ konstante Wert (der bei Verwendung eines Schrittmotor beispielsweise um die x-Achse pendelt) verlassen. Sobald die ermittelten Kraftdifferenzen einen positiven Wert aufweisen, wird ein bis dahin auf Null gesetzter Zeitzähler gestartet (Fig. 3). Dieser Zeitzähler misst diejenige Zeit, in der die ermittelten Kraftdifferenzen (Abweichungen der gemessenen Kraftwerte vom bereinigten Kraftmesswert) positive Werte (einschließlich Null) aufweisen, also beispielsweise in den Zeitintervallen t₂₅₋₂₇, t₂₉₋₃₁ und t₃₇₋₃₉ in Fig. 3. Nehmen die ermittelten Kraftdifferenzen negative Werte an, wird der Zeitzähler zurückgesetzt (auf Null) und wird erst wieder gestartet, wenn die ermittelten Kraftdifferenzen wieder positive Werte annehmen. Im unteren Teil der Fig. 3 sind die Werte des Zeitzählers schematisch dargestellt: eine durchgezogene Linie bedeutet, dass der Zeitzähler gestartet wurde und die Zeit misst. Bei fehlender Linie (negative Kraftdifferenzen) befindet sich der Zeitzähler im zurückgesetzten Zustand (Wert des Zeitzählers ist dann Null). Die Länge der einzelnen Linien stellt schematisch die Maximalwerte des Zeitzählers vor der jeweiligen Rücksetzung dar. Am Punkt 25 beginnt eine Zeit- und Wegzählung analog zum Schlittenantrieb des absinkenden Sensors 20. Der Wegzähler läuft hoch bis zum Punkt 27 und ermittelt dabei schließlich einen Wert von z.B. 0,03 mm (Fig. 4), d.h. der Sensor 20 hat von 25 bis 27 eine Distanz von 0,03 mm zurückgelegt. Am Punkt 27 wird diese Zählung gestoppt und gleichzeitig wieder auf 0 mm (und analog der Zeitzähler in Fig. 3 auf 0s) zurückgesetzt, da die Kraftwertdifferenzen jetzt in den Negativbereich gehen. Da die Kraftdifferenzwerte nun bis Punkt 29 unter Null liegen, wird der Zähler weiter in Nullstellung verbleiben. Die negativen Kraftdifferenzwerte deuten darauf hin, dass es sich bei den vorangehenden positiven Kraftdifferenzwerten um nur eine Störung handelte, die daher im Nachhinein als nicht gültig bewertet und damit verworfen wird. Ein Auftreffen des Messkörpers würde dagegen über den Sensor ein dauerhaftes positives Signal erzeugen. Ab Punkt 29 wiederholt sich der Vorgang in der Weise, dass der Wegzähler erneut eine Distanz bis zum Punkt 31 ermittelt, hiernach jedoch wieder erneut zurückgesetzt wird - also eine erneute Störung.

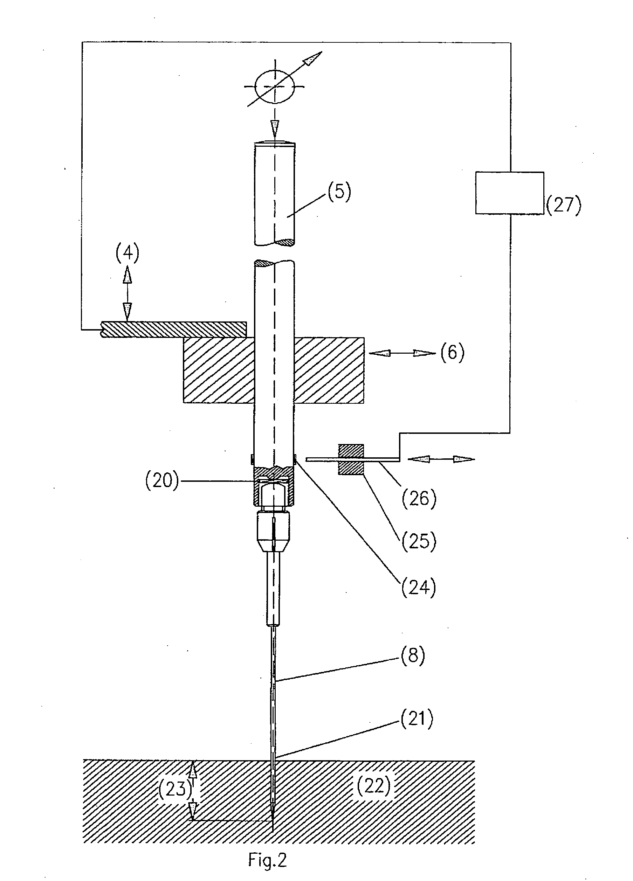

Sobald der Messkörper 5, 8 während des Absenkens die Oberfläche 21 des zu vermessenden Materials 22 (Fig. 2) kontaktiert (im vorliegenden Beispiel im Zeitpunkt t₄₁), wird die Zeit (und/oder der weitere Weg mittels eines Wegzählers z.B. mittels Kodierscheibe/ Impulszähler-Kombination) durch den Zeitzähler registriert. Bleiben nun die Kraftdifferenzen in beliebigen Werten, aber in der gleichen Richtung wirkend kontinuierlich weiter bestehen, wird im Zeitpunkt t₄₈ das Abbruchkriterium - nämlich, dass der Zeitzähler einen vorgegebenen Wert (hier 20 ms) erreicht bzw. überschreitet - erfüllt. In diesem Moment wird ein Bremsvorgang (Strecke 48 nach 51), sowie die nachfolgende Rückstellung eingeleitet und der Messkörper wird auf diejenige Position (s₄₁) (=exakter Aufsetzpunkt) zurückgesetzt, bei welcher der Zeitzähler zuletzt (t₄₁) gestartet wurde. Dann kann die eigentliche Messung des Härtegrades erfolgen.

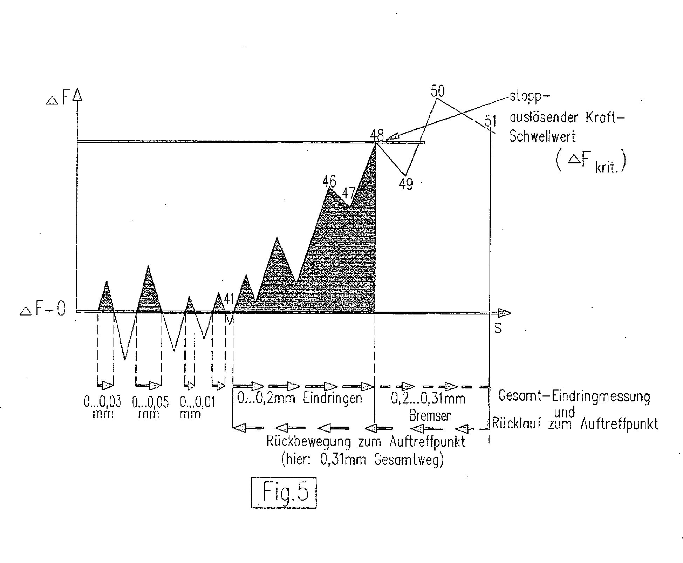

Im vorliegenden Beispiel liegt der exakte Aufsetzpunkt im Punkt 41. Dort beginnt eine weitere Zeit-/Wegzählung, die aufgrund der weiter steigenden Kraft nicht mehr unter Null zurückpendelt, d.h. die Zeit-/Wegzählung wird also nicht mehr zurückgesetzt. Am Punkt 48 erreicht die Zeit (Fig. 3), der Weg (Fig. 4) und/oder die Kraftdifferenz (Fig. 5) einen vorgegebenen Schwellwert, der in jedem Fall die Abwärtsbewegung des Schlittens schnellstmöglich stoppt (ein Störsignal dieser Größe würde also ebenfalls diese Bewegung stoppen). Der von 41 bis 48 ermittelte Weg ist z.B. 0,20 mm. Der Schlitten läuft aufgrund seiner Trägheit noch einen gewissen Weg bis zum absoluten Stillstand (= Punkt 51) nach. Der dabei zurückgelegte Weg ist nochmals z.B. 0,11 mm. Im Wegzähler ist die volle Distanz von 41 bis 51, also hier 0,20mm + 0,11 mm = 0,31 mm gespeichert. Der Schlitten muss nun hier um die Distanz 0,31 mm zurückfahren, um zum ersten registrierten Auftreffen (exakter Aufsetzpunkt 41) zurückzukehren. Bei dieser Auswertung werden also alle vorhergehenden Distanzzählungen als ungültig verworfen; nur die Wegzählung des ununterbrochen positiven Kraftsignals bis zum Abbruchkriterium (Zeit-, Weg- oder Kraftdifferenzschwelle) wird für die Ermittlung der Wegstrecke für das dann erforderliche Zurückfahren zum Auftreffpunkt herangezogen.

Hierdurch können vorteilhafterweise elektronische und/oder mechanische Störungen (beispielsweise die durch einen Schrittmotor verursachten positiven und negativen Beschleunigungen während des Absenkvorgangs, die sich durch oszillierende Kraftdifferenzen (z.B. ΔF₄₂₋₄₈) bemerkbar machen) eliminiert werden bzw. weist das erfindungsgemäße Verfahren eine geringe Empfindlichkeit gegenüber solchen Störungen auf. Die Auswahl des Abbruchkriteriums kann unter Berücksichtigung des zu vermessenden Materials und der verwendeten Geräte-Parameter (Gewicht des Messkörpers etc.) erfolgen.

Anstatt einer vorgegebenen Zeitspanne als Abbruchkriterium (Fig. 3) kann alternativ (siehe Fig. 5) ein vorgegebener Kraftdifferenzwert ΔFₖᵣᵢₜ (oder ein Weg - Fig. 4) verwendet werden. Dieser Kraftdifferenzwert ΔFₖᵣᵢₜ hat keinen Einfluss auf die genaue Bestimmung des exakten Aufsetzpunktes, da der Aufsetzpunkt bereits durch Verlassen der Nullkraftlinie entweder durch einen Zeitzähler (Fig. 3) und/oder durch einen Wegzähler (Fig. 4 und 5) "vorgemerkt" wird. Durch die Logik der Zeitbegrenzung (Fig. 3) und/oder Wegbegrenzung (Fig. 4) nach Verlassen der Nullkraftlinie (F_{Ber}) wird lediglich ein zu tiefes Eindringen des Messkörpers 5, 8 in das Material 22 verhindert, was sonst durch Kraterbildung das Ergebnis des nachfolgenden eigentlichen Messvorganges (Penetration) negativ beeinflussen würde. Die Zeitspanne bis zum Bremsvorgang wird daher sinnvoll in Abhängigkeit von Geräte- und Materialeigenschaften vor der Messung festgelegt (Bremsverzögerung). Ein Vorteil dieses Verfahrens liegt darin, dass unerwünschte elektronische oder mechanische Störungen in viel geringerem Maße Fehlmessungen verursachen können, als dieses bei bekannten Methoden der Fall ist. Dabei wird berücksichtigt, dass Störsignale mehr oder weniger kurze periodische Nulldurchgänge aufweisen, die innerhalb einer kritischen Restzeit bei jedem Nulldurchgang den mitlaufenden Wegzähler (oder Zeitzähler) zurücksetzen und erneut starten und damit keinen Bremsvorgang einleiten. Erst nach Überschreitung einer kritischen Zeit (Fig. 3), eines kritischen Weges (Fig. 4) und/oder einer kritischen Kraftdifferenz (Fig. 5) beginnt der Bremsvorgang und der vom Zählbeginn bis Stillstand registrierte Weg (S₄₁₋₅₁) wird zum Rückfahren in die exakte Startposition (S₄₁, 21) genutzt.

Ein weiterer Vorteil in dieser Anordnung besteht darin, dass nur einmal eine Kraftmessung für die exakte Startposition herangezogen wird und damit Störungen auch nur einmal einwirken können. Eine weitere Verbesserung wird dadurch erzielt, dass kein sonst gegen Störungen erforderlicher Sicherheits-Schwellwert für die Bremsauslösung erforderlich ist, sondern dass die Messgenauigkeit in Abhängigkeit dieser Störungen automatisch optimiert wird.

In Fig. 2 ist ein Messkörper 5, 8 mit integriertem Kraft-/Wegsensor 20 eines erfindungsgemäßen Penetrometers schematisch dargestellt. Aufgrund der Integration des Kraft-/Wegsensors 20 in den Fallstab 5 können unerwünschte Massen, die auf den Kraft-/Wegsensor 20 einwirken, reduziert werden. Der Fallstab 5 (in dem die Eindringnadel 8 gehalten ist) wird über die Fallstab - Arretierung 6 gehalten, wobei die Fallstab - Arretierung 6 in bekannter Weise über dem zu vermessenden Material abgestützt ist (hier nicht dargestellt). Die vertikale Position des Messkörpers 5, 8 wird über den Schrittmotor 4 gesteuert, der mit der Auswerte- und Steuereinheit 27 verbunden ist. Zwischen Auswerte- und Steuereinheit 27 und Kraft-/Wegsensor 20 besteht eine drahtgebundene oder drahtlose Datenübertragung.

Die für den Kraft-/Wegsensor 20 erforderliche Versorgung bzw. für das daraus resultierende Messsignal der Oberflächenberührung wird über elektrische Kontakte 24, 26 (oder alternativ kontaktlos bei Verwendung elektromagnetischer Wellen) an die allgemeine Steuerung 27 der Apparatur übertragen. Dieser Signalaustausch darf den anschließenden Eindringvorgang der eigentlichen Eindringprüfung durch unerwünschte Reibung nicht stören, weshalb die Kontaktierung nach dem Aufsetzvorgang - aber vor der Eindringprüfung (automatisch) - wegschwenkt.

### Bezugszeichenliste

- 1: Punktleuchte
- 2: Grobverstellung
- 3: Sensor zur Wegerfassung
- 4: Schrittmotor/Höhen-Feinverstellung
- 5: Messkörper/Fallstab
- 6: Fallstab - Arretierung
- 7: Lupe
- 8: Messkörper/Eindringnadel
- 9: Bedienfeld
- 10: Anzeige
- 20: Kraft-/Wegsensor
- 21: Exakte Position der Oberfläche des Prüfmaterials
- 22: Zu vermessendes Material/Prüfmaterial
- 23: Eindringtiefe/Penetrationstiefe
- 24: Elektrischer Kontakt des Kraft-/Wegsensors
- 25: Mittel zur horizontalen Bewegung
- 26: Elektrischer Kontakt der Auswerteeinheit
- 27: Auswerte- und Steuereinheit

## Patentansprüche

1. Verfahren zur Bestimmung des Härtegrades von halbfesten Materialien (22) durch Messung der Eindringtiefe (23) eines sich unter Eigengewicht in das zu untersuchende Material absenkenden Messkörpers (5, 8), wobei der Härtegrad des halbfesten Materials (22) aus der Eindringtiefe des Messkörpers (5, 8) bestimmt wird, wobei
vor der eigentlichen Messung des Härtegrades der mit einem Kraft-Weg-Sensor (20) verbundene Messkörper (5, 8) von einer über dem zu vermessenden Material (22) gelegenen Ausgangsposition (s₂₅) bis zu einem im zu vermessenden Material (22) gelegenen Umkehrpunkt (s₅₁) abgesenkt wird, und die exakte Startposition (21, s₄₁) der Oberfläche des zu vermessenden Materials (22) ermittelt und danach der Messkörper (5, 8) in der ermittelten Startposition (21, s₄₁) angeordnet wird,
**dadurch gekennzeichnet, dass**
vor oder während des Absenkens des Kraft-Weg-Sensors (20) von der Ausgangsposition (s₂₅) bis zum Umkehrpunkt (s₅₁) ein bereinigter Kraftmesswert (F_{Ber}) ermittelt wird und für eine Vielzahl von Messzeitpunkten (t₃₂ -t₄₈) die Kraftdifferenz (ΔF₃₂ - ΔF₄₈) zwischen dem bereinigten Kraftmesswert (F_{Ber}) und dem zum jeweiligen Zeitpunkt (t₃₂ - t₄₈) gemessenen Kraftmesswert (F₃₂ - F₄₆) bestimmt und derjenige Nullzeitpunkt (t₄₁) ermittelt wird, für den mindestens eines der folgenden Kriterien i)- iii):
i) ab dem Nullzeitpunkt (t₄₁) besitzen die Kraftdifferenzen (ΔF₄₁ - ΔF₄₈) aufeinander folgender Zeitpunkte (t₄₁ - t₄₈) das gleiche Vorzeichen und die Zeitdifferenz (Δt₄₈₋₄₁) zwischen dem Nullzeitpunkt (t₄₁) und einem der aufeinander folgenden Zeitpunkte (t₄₈) übersteigt eine vorgegebenen Zeitspanne (Δtₖᵣᵢₜ),
ii) ab dem Nullzeitpunkt (t₄₁) besitzen die Kraftdifferenzen (ΔF₄₁ - ΔF₁₈) aufeinander folgender Zeitpunkte (t₄₁ - t₄₈) das gleiche Vorzeichen und die Kraftdifferenz (ΔF₄₈) eines dem Nullzeitpunkt (t₄₁) nachfolgenden Zeitpunktes (t₄₈) übersteigt einen vorgegebenen Kraftwert (ΔFₖᵣᵢₜ),
iii) ab dem Nullzeitpunkt (t₄₁) besitzen die Kraftdifferenzen (ΔF₄₁ - ΔF₄₈) aufeinander folgender Zeitpunkte (t₄₁ - t₄₈) das gleiche Vorzeichen und die Wegdifferenz (ΔS₄₈₋₄₁) zwischen dem Nullzeitpunkt (t₄₁) und einem der aufeinander folgenden Zeitpunkte (t₄₈) übersteigt eine vorgegebene Weglänge (Δsₖᵣᵢₜ),
erfüllt ist, wobei die Position (21, s₄₁) des Messkörpers (5, 8) zum Nullzeitpunkt (t₄₁) als exakte Startposition (21, s₄₁) der Oberfläche des zu vermessenden Materials (22) verwendet wird.

2. Verfahren nach Anspruch 1,
**dadurch gekennzeichnet, dass**
zur Ermittlung des bereinigten Kraftmesswertes (F_{Ber}) ein Zeitintervall (t₂₅₋₅₁) nach Beginn (t₂₅) des Absenkens des Messkörpers (5, 8) bis zum Erreichen (t₅₁) des Umkehrpunktes (s₅₁) in eine Vielzahl von Messzeitpunkte (t₂₅ - t₅₁) unterteilt wird, wobei für eine erste Anzahl (n₁) von aufeinanderfolgenden Zeitpunkten (t₂₅ - t₃₁), während derer sich der Messkörper (5, 8) über dem zu vermessenden Material (22) befindet, die jeweiligen Kraftmesswerte (F₂₅ - F₃₁) gemessen und daraus ein bereinigter Kraftmesswert (F_{Ber}) als mathematisches Mittel der gemessenen Kraftmesswerte (F₂₅ - F₃₁) gebildet wird.

3. Verfahren nach Anspruch 2,
**dadurch gekennzeichnet, dass**
die Ermittlung des bereinigten Kraftmesswertes (F_{Ber}) zusätzlich unter Berücksichtigung der Absenkgeschwindigkeit des Messkörpers (5, 8) vorgenommen wird.

4. Verfahren nach Anspruch 1,
**dadurch gekennzeichnet, dass**
zur Ermittlung des bereinigten Kraftmesswertes (F_{Ber}) ein Referenzwert verwendet wird.

5. Verfahren nach Anspruch 4,
**dadurch gekennzeichnet, dass**
der Referenzwert unter Berücksichtigung des Gewichts des Messkörpers (5, 8) und der Absenkgeschwindigkeit des Messkörpers (5, 8) ausgewählt wird.

6. Verfahren nach einem der vorhergehenden Ansprüche,
**dadurch gekennzeichnet, dass**
zur Absenkung des Messkörpers (5, 8) in das zu vermessende Material (22) ein Schrittmotor verwendet wird.

7. Verfahren nach einem der vorhergehenden Ansprüche,
**dadurch gekennzeichnet, dass**
ein zu vermessendes Material (22) mit einem Nadel-Penetrationswert nach ASTM D5 von 5 bis 500 verwendet wird.

8. Verfahren nach Anspruch 7,
**dadurch gekennzeichnet, dass**
der Messkörper (5, 8) nur so geringfügig in das zu vermessende Material (22) abgesenkt wird, dass dieses beim Eindringen des Messkörper (5, 8) bis zum Umkehrpunkt (S₅₁) lediglich eine elastische Verformung erfährt.

9. Verfahren nach einem der Ansprüche 1 bis 7,
**dadurch gekennzeichnet, dass**
ein zu vermessendes Material (22) mit einem Arbeits-Penetrationswert nach ASTM D217 von 50 bis 500 verwendet wird.

10. Verfahren nach Anspruch 9,
**dadurch gekennzeichnet, dass**
der Messkörper (5, 8) derart in das zu vermessende Material (22) abgesenkt wird, dass dieses beim Eindringen des Messkörper (5, 8) bis zum Umkehrpunkt (S₅₁) eine inelastische Verformung erfährt.

11. Verfahren nach einem der vorhergehenden Ansprüche,
**dadurch gekennzeichnet, dass**
die Zeitspanne (Δtkrit), der Kraftwert (ΔFkrit) und/oder die Weglänge(Δskrit) für die Abbruchskriterien i)- iii) in Abhängigkeit des zu untersuchenden Materials (22) vorgegeben werden.

12. Verfahren nach einem der vorhergehenden Ansprüche,
**dadurch gekennzeichnet, dass**
sowohl das Kriterium ii) als auch gleichzeitig mindestens eines der Kriterien 1)und iii) erfüllt ist.

13. Verfahren nach einem der vorhergehenden Ansprüche,
**dadurch gekennzeichnet, dass**
gleichzeitig die Kriterien i)- iii) erfüllt sind.

## Claims

1. Method for determination of the degree of hardness of semisolid materials (22) by measurement of the penetration depth (23) of a measuring body (5, 8) which is dropped into the material to be tested under its own weight, wherein the degree of hardness of the semisolid material (22) is determined from the penetration depth (23) of the measuring body (5, 8), wherein prior to the penetration measurement the measuring body (5, 8) which is connected to a force/path sensor (20) is moved downwards from a initial position (S₂₅) which is located above the test material (22) to a return point (S₅₁) which is located within the test material (22), and the exact starting position (21, s₄₁) of the surface of the test material (22) is determined and the measuring body (5, 8) is arranged in the determined starting position (21, s₄₁),
**characterized in that**
an adjusted force value (F_{Ber}) is determined prior or during the downward movement of the force/path sensor (20) from the initial position (S₂₅) to the return point (S₅₁) and for a plurality points in time (t₃₂₋₄₈) the force difference (ΔF₃₂ - ΔF₄₈) between the adjusted force value (F_{Ber}) and the measured force value (F₃₂ - F₄₈) of the respective point in time (ΔF₃₂ - ΔF₄₈) is determined and furthermore a zero time (t₄₁) is determined for which at least one of the following criteria i) - iii) is met:
i) the force differences of consecutive measurements have the same algebraic sign effective from the zero time (t₄₁) and the time difference between the zero time (t₄₁) and one of the consecutive measurements exceeds a predetermined time limit,
ii) the force differences of consecutive measurement have the same algebraic signs effective from the zero time (t₄₁) and the force difference of a measurement after the zero times (t₄₁) exceeds a predetermined force value,
iii) the force differences of consecutive measurements have the same algebraic sign effective from the zero time (t₄₁) and a path difference between the zero time (t₄₁) path value and one of the consecutive measurements exceeds a predetermined path limit,
wherein the position (21, s₄₁) of the measuring body (5, 8) at the zero time (t₄₁) is used as the exact starting position (21, s₄₁) of the surface of the test material (22).

2. The method according to claim 1,
**characterized in that**
a time interval is divided into a plurality of points in time for the determination of an adjusted force measurement value, wherein the time interval is located after the start of the downward movement of the measuring body (5, 8) until the arrival of the return point, wherein the respective force values are measured for a given number of consecutive measuring times during which the measuring body (5, 8) is located above the semisolid material and an adjusted force value is determined as an arithmetic mean of the measured force values.

3. The method according to claim 2,
**characterized in that**
the adjusted force value (F_{Ber}) is additionally determined in accordance with the lowering velocity of the measuring body (5, 8).

4. The method according to claim 1,
**characterized in that**
a reference value is used for the determination of the adjusted force value (F_{Ber}).

5. The method according to claim 4,
**characterized in that**
the reference value is selected in accordance with the weight of the measuring body (5, 8) and the lowering velocity of the measuring body (5, 8).

6. The method according to one of the preceding claims,
**characterized in that**
a step motor (4) is used for lowering the measuring body (5, 8) into the material to be measured (22).

7. The method according to one of the preceding claims,
**characterized in that**
a material (22) is used comprising a needle penetration (8) value ranging from 5 to 500 according to ASTM D5.

8. The method according to claim 7,
**characterized in that**
the lowering of the measuring body (5, 8) into the test material (22) is carried out such marginally that only an elastic deformation results in the test material (22) due to the penetration of the measuring body (5, 8) up to the return point.

9. The method according to claims 1 to 7,
**characterized in that**
a test material (22) is used having a working penetration value according to ASTM D217 ranging from 50 to 500.

10. The method according to claim 9,
**characterized in that**
the measuring body (5, 8) is lowered such into the test material (22) that the test material (22) is inelastically deformed due to the penetration of the measuring body (5, 8) up to the return point.

11. The method according to one of the preceding claims,
**characterized in that**
the time limit (Δt_{KRIT}), the force (ΔF_{KRIT}) limit or the path limit (ΔS_{KRIT}) for the criteria i) - iii) is determined in accordance with the test material (22) and/or device parameters.

12. The method according to one of the preceding claims,
**characterized in that**
criterion ii) and at least one of criteria i) and iii) are met at the same time.

13. The method according to one of the above claims,
**characterized in that**
all of criteria i) - iii) are met at the same time.

## Revendications

1. Procédé de détermination du degré de dureté de matériaux semi-solides (22) par mesure de la profondeur de pénétration (23) d'un élément de mesure (5, 8) plongeant sous poids propre dans le matériau à examiner, le degré de dureté du matériau semi-solide (22) étant déterminé à partir de la profondeur de pénétration (23) d'élément de mesure (5, 8), l'élément de mesure (5, 8) lié à un capteur force/déplacement (20) avant la mesure proprement dit du degré de dureté étant descendu à partir d'une position initiale (s₂₅), qui se trouve au-dessus du matériau (22) à mesurer, jusqu'à un point de retour (s₅₁), qui se trouve dans le matériau (22) à mesurer, et la position exacte de démarrage (21, s₄₁) de la surface du matériau (22) à mesurer étant déterminée et ensuite l'élément de mesure (5, 8) étant agencé dans la position de démarrage déterminée (21, s₄₁), **caractérisé en ce que** avant ou pendant l'abaissement du capteur force/déplacement (20) de la position initiale (s₂₅) jusqu'au point de retour (s₅₁), une valeur corrigée de force (F_{Ber}) est déterminée, et pour une pluralité de moments de mesure (t₃₂ - t ₄₈) la différence de force (ΔF₃₂ - ΔF₄₈) entre la valeur corrigée de force (F_{Ber}) et la valeur de force (F₃₂ - F₄₈) mesurée à chaque moment (t₃₂ - t₄₈) est établie, et le temps zéro (t₄₁) est déterminé pour lequel au moins un des critères suivants i) - iii):
i) à partir du temps zéro (t₄₁) les différences de force (ΔF₃₂ - ΔF₄₈) de moments consécutifs (t₄₁ - t₄₈) possèdent le même signe et la différence de temps (Δt₄₈ -₄₁) entre le temps zéro (t₄₁) et un de moments consécutifs (t₄₈) dépasse une période prédéterminée (Δtₖᵣᵢₜ) ,
ii) à partir du temps zéro (t₄₁) les différences de force (ΔF₄₁ - ΔF₄₈) de moments consécutifs (t₄₁ - t₄₈) possèdent le même signe et la différence de force (ΔF₄₈) d'un moment (t₄₈) suivant le temps zéro (t₄₁) dépasse une valeur de force prédéterminée (ΔFₖᵣᵢₜ),
iii) à partir du temps zéro (t₄₁) les différences de force (ΔF₄₁ - ΔF₄₈) de moments consécutifs (t₄₁ - t₄₈) possèdent le même signe et la différence de déplacement (ΔS₄₈ - ₄₁) entre le temps zéro (t₄₁) et un de moments consécutifs (t₄₈) dépasse une longueur de déplacement prédéterminée (ΔSₖᵣᵢₜ),
est rempli, la position (21, s₄₁) d'élément de mesure (5, 8) au temps zéro (t₄₁) étant utilisée en tant que position initiale exacte (21, s₄₁) de la surface du matériau (22) à mesurer.

2. Procédé selon la revendication 1,
**caractérisé en ce que**
pour la détermination de la valeur corrigée de force (F_{Ber}) un intervalle de temps (t₂₅ - ₅₁) après le démarrage (t₂₅) de l'abaissement d'élément de mesure (5, 8) jusqu'à l'arrivée au point de retour (s₅₁) est subdivisé dans une pluralité de moments de mesure (t₂₅ - t₅₁), pour un premier nombre (n₁) de moments consécutifs (t₂₅ - t₃₁), pendant lesquels l'élément de mesure se trouve au-dessus du matériau (22) à mesurer, les valeurs respectives de force (F₂₅ - F₃₁) étant mesurées et à partir de ces valeurs une valeur corrigée de force (F_{Ber}) étant formées en tant que moyenne mathématique de valeurs de force (F₂₅ - F₃₁) mesurées.

3. Procédé selon la revendication 2,
**caractérisé en ce que**
la détermination de la valeur corrigée de force (F_{Ber}) est effectuée en outre en tenant compte de la vitesse d'abaissement d'élément de mesure (5,8).

4. Procédé selon la revendication 1,
**caractérisé en ce que**
pour la détermination de la valeur corrigée de force (F_{Ber}) une valeur de référence est utilisée.

5. Procédé selon la revendication 4,
**caractérisé en ce que**
la valeur de référence est choisie en tenant compte du poids d'élément de mesure (5, 8) et de la vitesse d'abaissement d'élément de mesure (5, 8).

6. Procédé selon l'une quelconque des revendications précédentes,
**caractérisé en ce que**
pour l'abaissement d'élément de mesure (5, 8) dans le matériau (22) à mesurer un moteur pas à pas est utilisé.

7. Procédé selon l'une quelconque des revendications précédentes,
**caractérisé en ce que**
un matériau (22) à mesurer avec une valeur de pénétration d'aiguille selon ASTM D5 de 5 à 500 est utilisé.

8. Procédé selon la revendication 7,
**caractérisé en ce que**
l'élément de mesure (5, 8) est plongé dans le matériau (22) à mesurer seulement si faiblement que le matériau lors de la pénétration d'élément de mesure (5, 8) jusqu'au point de retour (s₅₁) n'est déformé qu'élastiquement.

9. Procédé selon l'une des revendications 1 à 7,
**caractérisé en ce que**
un matériau (22) à mesurer avec une valeur de pénétration de travail selon ASTM D217 de 50 à 500 est utilisé.

10. Procédé selon la revendication 9,
**caractérisé en ce que**
l'élément de mesure (5, 8) est plongé dans le matériau (22) à mesurer en sorte que le matériau lors de la pénétration d'élément de mesure (5, 8) jusqu'au point de retour (s₅₁) est déformé inélastiquement.

11. Procédé selon l'une quelconque des revendications précédentes,
**caractérisé en ce que**
l'intervalle de temps (Δtkrit), la valeur de force (ΔFkrit) et/ou la longueur de déplacement (Δskrit) sont prédétermines pour les critères d'interruption i) - iii) en fonction du matériau (22) à examiner.

12. Procédé selon l'une quelconque des revendications précédentes,
**caractérisé en ce que**
non seulement le critère ii) mais aussi simultanément au moins un des critères i) et iii) est rempli.

13. Procédé selon l'une quelconque des revendications précédentes,
**caractérisé en ce que**
les critères i) - iii) sont remplis simultanément.
